# EUROPÄISCHE PATENTANMELDUNG

(11) **EP 1 982 827 A2**
(43) Veröffentlichungstag der Anmeldung: **22.10.2008**
(21) Anmeldenummer: 08102030.7
(22) Anmeldetag: 26.02.2008
(51) Int. Cl.: B32B 3/00

(54) **Leichtbaustruktur**

(30) Priorität: 02.03.2007 DE 102007010262
(71) Anmelder: SIEMENS AKTIENGESELLSCHAFT, 80333 München (DE); Simon, Leutenegger, 8405 Winterthur (CH)
(72) Erfinder: Kammerhofer, Gert, 86687 Kaisheim (DE); Leutenegger, Simon, 8405 Winterthur (CH); Reinecke, Jürgen, 85635 Höhenkirchen (DE); Stanek, Christian, 83250 Marquartstein (DE)
(74) Vertreter: Maier, Daniel Oliver

(57) **Zusammenfassung**

Leichtbaustruktur umfassend mindestens eine Sandwichplatte (3) mit einem wärmeempfindlichen Kernmaterial (1) und mit das Kernmaterial (1) umhüllenden Deckschichten (2), mindestens ein Anschlusselement (6), welches am äußeren Umfang der Sandwichplatte (3) angrenzend positioniert und mittels mindestens einer Rühr-Reib-Schweißung (5) mit diesem verbunden ist.

Anwendung/Produkt: Unterschiedlichste Leichtbaustrukturen mit Sandwichplatten insbesondere zur Realisierung von Fahrzeugkabinen aller Art

## Beschreibung

Die Erfindung betrifft eine Leichtbaustruktur bestehend aus Sandwichplatte und am schmalseitigen Umfang anschließendem, formstabilen Element.

Die Sandwichplatten bzw. Paneele bestehen aus einem wärmeempfindlichen Kernmaterial mit metallischen Deckschichten, welche in der Regel das Kernmaterial vollständig umschließen. Die Sandwichplatten sind mit den sie umgebenden formstabilen Elementen passend gefügt und fest mit diesen verbunden. Die gesamte Leichtbaustruktur weist hohe Biegefestigkeiten auf, ist wasser- und luftdicht und nimmt insbesondere in Sandwichebene wesentliche Normal-, Scherkräfte sowie statische und dynamische Plattenbiegemomente auf.

Sandwichplatten, welche in als Mantelschichten ausgebildeten metallische Deckschichten Kernmaterialien enthalten, weisen, verglichen mit ihrem Gewicht, sehr hohe Belastungskennwerte hinsichtlich verschiedener mechanischer Parameter auf. Sie sind sowohl statisch als auch dynamisch hoch belastbar und in der Regel wasser- und luftdicht. Derartige Sandwichplatten mit metallischen Deckschichten und einem Kernmaterial beinhalten als Kernmaterial in der Regel Schaumstoffe, Metalle oder Ähnliches, wobei dies als Vollmaterial ausgebildet sein kann oder in Wabenform vorliegt.

Wesentliche Anforderungen werden beim Aufbau derartiger Leichtbaustrukturen an die gegenseitige Übertragung von Normal(2ug/Druck)- und Scherspannungen sowie Plattenbiegemomente zwischen Sandwich-Paneel und umgebendem Paneel zum stabilen Element gestellt. An Fügestellen zwischen diesen Elementen, die insgesamt eine Leichtbaustruktur darstellen, müssen die auftretenden Kräfte über die Deckbleche der Sandwichprofile in jede Richtung weitergeleitet werden. An dieser Stelle ergeben sich wesentliche Probleme durch die bei vielen Verbindungsverfahren auftretende Prozesswärme. Beispielsweise wird beim Schweißen die Prozesswärme durch Wärmeleitung in die Werkstücke eingeleitet und die nähere Umgebung wesentlich mit erhitzt. Daraus resultiert eine direkte Beschädigung von Kernmaterialien, da diese meist nicht hitzebeständig sind.

Zur Umgehung verschiedener Probleme bei verbindungstechnischen Verfahren wurden Anschlussprofile, die mit Sandwichplatten fest zu verbinden sind, geklebt, vernietet oder beispielsweise lasergeschweißt oder widerstandsgeschweißt. Mit diesen Fügeverfahren konnten jedoch bisher nicht sämtliche bei einer Leichtbaustruktur auftretenden Nachteile vermieden werden.

Eine Nietverbindung ist eine bekannte Technologie, die jedoch den Nachteil aufweist, dass eine wasser- oder luftdichte Verbindung nur mit separaten Mitteln sichergestellt werden kann. Die übertragbaren Kräfte sind abhängig von der Nietenanzahl. Die Wasserdichtigkeit ist nur sehr schwer erreichbar und hängt insbesondere von den Nietabständen sowie der Qualität und der Verarbeitung der Dichtstoffe ab.

Der Einsatz von Klebungen zur Verbindung von Werkstücken stellt zwar eine zuverlässige Technologie dar, die jedoch mit sehr engen Toleranzen und sehr aufwändigen Vorbereitungen verbunden ist. So sind beispielsweise zur Reinigung von Fügeflächen wesentliche Vorbereitungen sicherzustellen, die sehr aufwändig sind und die entsprechenden Produkte enorm verteuern. Weiterhin ist der Nachweis einer Ermüdung der Verbindung sehr aufwändig, so dass Abschätzungen über die Lebensdauer einer Verbindung nur schwer möglich sind. Folglich müssen hohe Sicherheitsfaktoren angesetzt werden. Auch hier ist eine wasserdichte Verbindung nur sehr schwer zu erreichen. Weiterhin sind Klebstoffe mit geltenden Brandschutzvorschriften in Einklang zu bringen.

Der Einsatz von Laser-Schweiß-Verfahren wird teilweise bei Leichtbaustrukturen angewandt, weist jedoch mehrere Nachteile auf. So ist der Nachweis einer Verbindungsermüdung nur ungenügend feststellbar. Die sichere Durchführung des Prozesses ist nicht zuverlässig reproduzierbar. Bei großen Baugruppen und kleinen Stückzahlen führt dies zu mangelnder Qualitätssicherung. Andererseits sind die Toleranzanforderungen für die Vorbereitung einer Laserverschweißung sehr hoch, da der einzuhaltende Spalt bei den vorliegenden Blechstärken extrem klein ist. So muss beispielsweise ein Überlapp-Stoß mit einem 1mm dicken Blech einen Spalt von 0,04 µm aufweisen. Laser-Schweiß-Verbindungen sind darüber hinaus nicht umfassend untersucht. Verschweißungen am Rand von verklebten Sandwichplatten ist mit jeweils großem Risiko verbunden, da Verunreinigungen durch Klebstoffe, Lösungsmittel etc. in Folge von Gasbildungen zu zusätzlicher Porenbildung und zu Bindefehlern führen kann.

Eine wasserdichte Verbindung ist nur schwer herzustellen, da mit Porenbildung zu rechnen ist und mit nicht gleichförmiger Ausbildung der Schweißnaht.

Das so genannte MIG-Schweißen (Metall-Inert-Gas) mit Wasserkühlung der Randprofile ist mit erheblichem Aufwand verbunden.

Beim Widerstandschweißen entsteht soviel Prozesswärme, dass nicht hitzebeständige Kernmaterialien zerstört werden. Wird Wasserkühlung der Randprofile eingesetzt, welche direkt als Kühlleitungen benutzt werden, so ist der Aufwand für die Wasserkühlung beträchtlich. Zudem liegen die Ermüdungsfestigkeiten einer MIG-Naht relativ niedrig. Die Wasserdichtigkeit der fertigen Verbindung ist schwierig herzustellen, da Porenbildung vorliegt und die Schweißnaht diskontinuierlich sein kann.

Der Erfindung liegt die Aufgabe zugrunde, eine Leichtbaustruktur zu beschreiben, welche oben angeführte Nachteile im Stand der Technik ausräumt. Die Lösung dieser Aufgabe geschieht durch die Merkmalskombination nach Anspruch 1.

Vorteilhafte Ausgestaltungen sind den Unteransprüchen zu entnehmen.

Der Erfindung liegt die Erkenntnis zugrunde, dass Leichtbaustrukturen mittels Sandwichplatten mit an die Sandwichplatte bzw. deren Randelement anschließenden formstabilen Elementen mit geringem Wärmeeintrag, mit Herstellung einer luft- und wasserdichten, gleichmäßigen Verbindung, mit Beibehaltung einer hohen Biegefestigkeit der Sandwichplatte und mit zuverlässiger Standfestigkeit bzgl. der zu übertragenden statischen und dynamischen Kräfte zwischen den Werkstücken durch Einsatz einer FSW-Schweißung darstellbar sind. Eine FSW-Schweißung ist eine so genannte Friction Stir Welding/Schweißung, die deutschsprachig mit Rühr-Reib-Schweißung bezeichnet ist.

Beim Einsatz einer FSW-Schweißung ist natürlich zu beachten, dass geeignete Schweißpartner vorliegen, die grundsätzlich mittels einer Schweißverbindung verbindbar sind. Genauer gesagt, geschieht die Lösung der zahlreichen Nachteile weitestgehend durch die Verbindung einer aus Kernmaterial und aus Deckschichten bestehenden Sandwichplatte mit einem vorzugsweise formstabilen Anschlusselement im Randbereich der Sandwichplatte durch eine FSW-Schweißnaht. Daran anschließend werden formstabile Elemente angebracht, wie beispielsweise Fensterrahmen oder Türkonstruktionen. Dabei liegen Randelemente zwischen Deckschichten einer Sandwichplatte, die über den Bereich der Kernfüllung hinaus verlängert sind.

Die FSW-Schweißnaht ist erfindungsgemäß die von der Sandwichplatte ausgehend erste Schweißnaht, die grundlegend dazu dient, weitere formstabile Elemente, hier die Anschlusselemente, mit der Sandwichplatte zu verbinden. Nachfolgende Schweißungen mit größerem Abstand von der Sandwichplatte können auch durch andere Schweißverfahren dargestellt werden, falls der Temperatureintrag in die Sandwichplatte verträglich ist. Kombinationen mit Klebungen sind insofern zulässig, falls ein Eintrag von Klebstoffen in die Schweißzone unterbunden wird. Insofern sind Klebungen innerhalb der Sandwichplatte denkbar.

Die Verbindungstechnologie der FSW-Schweißung ist mit folgenden Vorteilen verbunden:
- die Schweißnaht kann aufgrund des geringen Wärmeeintrag des Verfahrens sehr nahe an nicht-hitzebeständigen Kernmaterialien von Sandwichplatten gelegt werden;
- das Verbindungsverfahren erfordert keinerlei Zusatzstoffe und kein Schutzgas;
- das Verbindungsverfahren ist mit einer geringen Umweltbelastung verbunden, da weder Rauch noch Staub noch schadhafte Gase entweichen;
- eine FSW-Schweißnaht zeigt geringe einseitige Nahtüberhöhung und ist in der Regel nicht mit Spritzern verbunden;
- eine FSW-Schweißnaht weist eine geringe Anzahl von Poren auf, da in der Regel die Schmelztemperatur des Werkstoffes nicht erreicht wird;
- das Verbindungsverfahren ist nicht mit einem Legierungsabbrand oder einer Kornvergrößerung verbunden;
- herstellbare Verbindungsnähte weisen eine hohe und reproduzierbare Qualität auf;
- statische und dynamische Festigkeiten der FSW-Verbindungsnähte weisen höhere Werte auf als bei MIG-Schweißnähten, wobei die Vorteile gegenüber Laserverschweißungen nochmals größer sind;
- die Festigkeitswerte bei FSW-Verbindungen sind wesentlich zuverlässiger und mit kleinerer Streuung zu erzielen als beispielsweise bei Laserverbindungen.

Hinsichtlich der Kernmaterialien einer Sandwichplatte ist auszuführen, dass grundsätzlich Sandwichplatten mit beliebigen Kernwerkstoffen in beliebigen Strukturen kraftschlüssig einbaubar sind. Die Sandwichplatte kann nichtmetallische und/oder metallische Schaumstoffe enthalten. Weiterhin können nichtmetallische und/oder metallische Wabenformen vorhanden sein. Weiterhin können unterschiedlichste Materialkombinationen bzw. Verbundwerkstoffe eingesetzt werden. Wesentlich ist die vollständige Ausfüllung des Hohlraums, der durch die Deckschichten bzw. durch die Mantelschichten der Sandwichplatte vorgegeben ist.

Kernmaterial und Deckschichten wirken zur Darstellung einer nach außen hin stabilen Konstruktion zusammen, da das Kernmaterial vorhandene durch metallische Deckschichten gebildete Hohlräume vollständig ausfüllt. Die Sandwichplatte kann grundsätzlich aus verschiedenen Materialien hergestellt sein, wobei es vorteilhaft ist, die metallischen Deckschichten aus gleichen oder ähnlichen Werkstoffgruppen zusammenzustellen. So ist es beispielsweise auch möglich, vakuumverklebte Paneele/Platten mit integrierten Randelementen als Sandwichplatte einzusetzen. Weiterhin können wandverklebte Platten mit nachträglich eingeklebten Randprofilen oder auch handgeklebte Platten eingesetzt werden.

Die Lösung entsprechend der Erfindung ermöglicht im Sinne einer realisierbaren Leichtbaustruktur den Aufbau derselben aus sehr leichten Sandwichplatten mit Kernmaterialien in Kombination mit einer statisch und dynamisch hoch belastbaren, wasser- und luftdichten Verbindung sowie die Einbindung in eine Gesamtstruktur, wobei im Betrieb entstehende Kräfte gleichmäßig und zuverlässig an Verbindungsstellen angreifen und weitergeleitet werden.

Ein wesentlicher Vorteil der Erfindung liegt in der sehr gleichmäßigen und porenarmen Verschweißung, die insbesondere wasserdicht ist, so dass beispielsweise auch hygroskopische Schaumstoffe, korrodierende metallische Waben oder feuchteempfindliche Klebstoffe in einer Sandwichplatte einsetzbar sind.

Im Folgenden werden anhand von begleitenden, schematischen Figuren 1-3, die Erfindung nicht einschränkende Ausführungsbeispiele beschrieben:
- Figur 1 zeigt: einen Verbindungsbereich zwischen einer Sandwichplatte 3 und einem formstabilen Element 4, welches mit der Sandwichplatte fest zu verbinden ist,
- Figur 2 zeigt: eine flächig ausgedehnte Sandwichplatte 3 mit leichter Krümmung, die jeweils im Verbindungsbereich an formstabile Elemente 4 angebunden ist,
- Figur 3 zeigt: eine schematische Darstellung zur Realisierung einer FSW-Schweißnaht 5, 11.

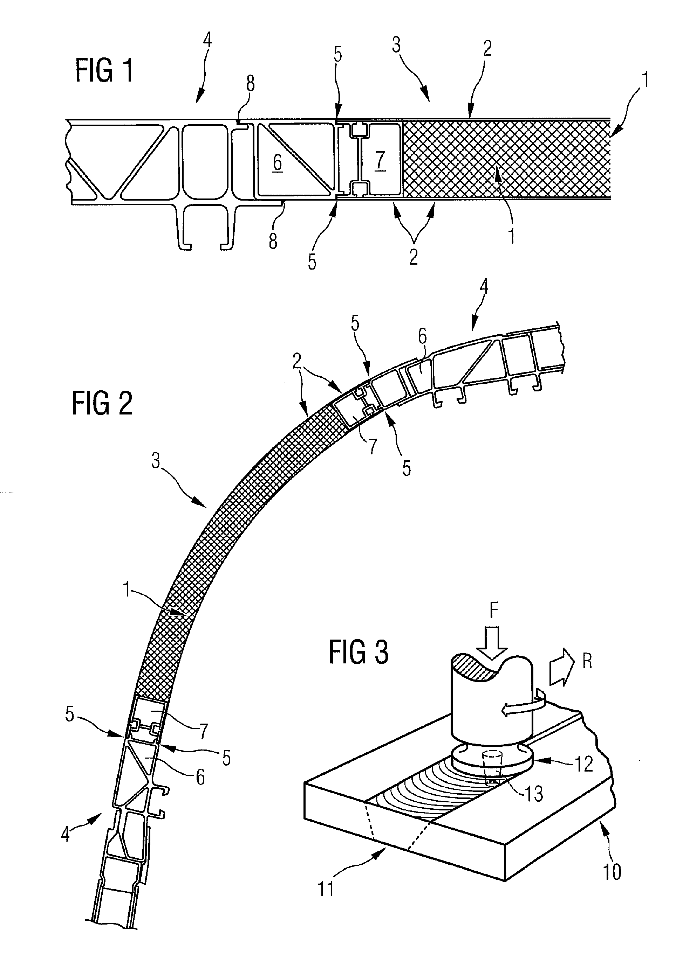

In Figur 1 sind von rechts nach links eine Sandwichplatte 3, ein Randelement 7 und ein formstabiles Element 4 dargestellt. Die Sandwichplatte 3 besteht aus einem Kernmaterial 1, metallischen Deckschichten 2, wobei das Randelement 7 zwischen Verlängerungen der Deckschichten 2 liegt. Die dem wärmeempfindlichen Kernmaterial nächstliegende Schweißverbindung ist die FSW-Schweißnaht. Das mit der Sandwichplatte 3 zu verbindende, Anschlusselement 6 ist formstabil aufgebaut und über dauerfeste Verbindungen mit der Sandwichplatte 3 verbunden. Ausreichend entfernt vom wärmeempfindlichen Kernmaterial 1 liegende Widerstands-Schweißverbindungen wie beispielsweise die Schweißnaht 8 können zwischen dem Anschlusselement 6 und dem formstabilen Element 4 vorhanden sein. Die Realisierung der Verbindung 5 der Sandwichplatte nach außen hin ist jedoch, um diese möglichst nah am Kernmaterial 1 platzieren zu können, mit einem nicht wärmebelastenden oder gering wärmebelastenden Verfahren auszuführen. Die FSW-Schweißnaht 5, 11 ist somit eine ideale Verbindungsart.

Figur 2 zeigt eine Sandwichplatte 3, die für den Einsatz als Wagenkasten an einem Fahrzeug eine geringe Krümmung mit gleich bleibenden Bauteilstärken aufweist, welche jeweils in Anschlussrichtung weiterer Elemente ein Randelement 7 umfasst, an dessen Ende FSW-Schweißnähte 5 positioniert sind. Diese dienen der Verbindung der Sandwichplatte 3 zum jeweiligen Anschlusselement 6 unter Mitbenutzung des Randelements 7. Die formstabilen Elemente 4 können jede Art von Tragkonstruktionen umfassen, die sinnvoller Weise analog aufgebaut sind. Mit anderen Worten sind zum Aufbau einer Leichtbaustruktur mindestens zwei Teile miteinander zu verbinden, die weder konstruktiv noch in den Materialeigenschaften noch in mechanischer Hinsicht Dimensionssprünge aufweisen. Dies gilt auch für Materialzusammensetzungen. Dem steht nicht entgegen, dass die Sandwichplatte aus wesentlich unterschiedlichen Materialien zusammengefügt ist. Entsprechend Figur 2 sind somit mehrere, etwa gleich starke Bauelemente zusammengesetzt und erstrecken sich senkrecht zur Zeichenebene in flächiger Art.

In Figur 3 ist schematisch die Ausbildung einer FSW-Schweißnaht 11 dargestellt. Ein rotierendes Werkzeug wird mit einer Andruckkraft F relativ zum Werkstück 10 in Bewegungsrichtung R bewegt. Durch die Werkzeugschulter 12 sind die bei hergestellter Verbindung durch die FSW-Schweißnaht vorhandenen Grenzen der Schweißnaht definiert. Ein so genannter profilierter Stift 13 sorgt unter Umständen für eine Materialmischung.

Gegenüber dem Stand der Technik können somit Sandwichplatten an ein formstabiles Anschlusselement gefügt werden, indem die durch verlängerte Deckbleche ausgebildeten Randelemente mit entsprechenden Anschlusselementen über eine oder mehrere FSW-Schweißnähte verbunden sind.

Anwendungen von Sandwichelementen sind beispielsweise Wagenkästen bei Zügen, Bussen, Seilbahnen, Fahrzeugen aller Art sowie auch Leichtbaustrukturen bei bestimmten Bauwerken.

Wesentlich ist die Betrachtung, dass mittels des Fügeverfahrens FSW, bzw. Rühr-Reib-Schweißen, in Kombination mit nicht wärmebeständigen Kernwerkstoffen eine Darstellung einer Leichtbaustruktur möglich ist, die bisher nicht derart zuverlässig aufgebaut werden konnte. Grundsätzlich sind dabei nichtmetallische Kernwerkstoffe wie Schäume oder nichtmetallische Waben als Füllmaterial für die Sandwichplatten einsetzbar. Genauso sind Aluminiumwaben verwendbar, die beispielsweise auch verklebt sein können.

Als Kernmaterialien sind sämtliche Kunststoffe in jeder Form einsetzbar.

## Patentansprüche

1. Leichtbaustruktur umfassend:
- mindestens eine Sandwichplatte (3) mit einem wärmeempfindlichen Kernmaterial (1) und mit das Kernmaterial (1) umhüllenden Deckschichten (2),
- mindestens ein Randelement (7), welches zwischen überstehenden Deckschichten (2) der Sandwichplatte (3) positioniert ist und zur Übertragung von Kräften im Kernmaterial (1) dient,
- mindestens ein Anschlusselement (6), welches am äußeren Umfang der Sandwichplatte (3) angrenzend positioniert und mittels mindestens einer FSW/Rührreib-Schweißung (5) mit diesem verbunden ist.

2. Leichtbaustruktur nach Anspruch 1, bei der
mittels FSW-Schweißung (5) mindestens eine Sandwichplatte (3), mit mindestens einem Anschlusselemente (6) und dieses anschließend mit mindestens einem externen formstabilen Elemente (4) verbunden ist.

3. Leichtbaustruktur nach Anspruch 1 oder 2, bei der Werkstoffpaarungen, die mit einer FSW-Schweißnaht verbunden sind, aus Aluminium oder Aluminiumlegierungen ausgewählt sind.

4. Leichtbaustruktur nach Anspruch 1, 2, oder 3 , bei der die externen formstabilen Elemente (4) mit annähernd gleicher Bauteilstärke wie die Sandwichplatte (3) flächig erstreckt, ausgebildet sind.

5. Leichtbaustruktur nach einem der Ansprüche 1-4, bei der ein formstabiler Wagenkasten für den Fahrzeugbau, für Luft- und Raumfahrt oder für Schiffbau oder für statische Bauwerke dargestellt ist.
